# EUROPÄISCHE PATENTSCHRIFT

(11) **EP 0 670 209 B1**
(45) Veröffentlichungstag und Bekanntmachung des Hinweises auf die Patenterteilung: **07.01.1998**
(21) Anmeldenummer: 94108494.9
(22) Anmeldetag: 02.06.1994
(51) Int. Cl.: B29C 45/27

(54) **Heizeinrichtung, insbesondere zum Einsatz in Spritzgiessformen zum Verarbeiten thermoplastischer Materialien**
Heating device, in particular for use in injection moulds for processing thermoplastic materials
Dispositif de chauffage, notamment à utiliser dans des moules d'injection pour traiter des matières thermoplastiques

(30) Priorität: 01.03.1994 DE 9403416 U
(43) Veröffentlichungstag der Anmeldung: 06.09.1995
(73) Patentinhaber: DME Normalien GmbH, 74196 Neuenstadt/Kocher (DE)
(72) Erfinder: Deissler, Klaus, D-74248 Ellhofen (DE)
(74) Vertreter: Clemens, Gerhard, Dr.-Ing.

(56) Entgegenhaltungen:
- EP-A- 0 165 729
- EP-A- 0 468 483
- DE-A- 2 821 736
- DE-A- 3 001 017
- US-A- 4 922 082
- PATENT ABSTRACTS OF JAPAN vol. 6 no. 142 (M-146) [1020] ,31.Juli 1982 & JP-A-57 062848 (TOSHIBA KIKAI)
- PATENT ABSTRACTS OF JAPAN vol. 9 no. 294 (M-431) [2017] ,20.November 1985 & JP-A-60 132724 (FANUC)

## Beschreibung

Die vorliegende Erfindung betrifft eine Heizeinrichtung, insbesondere zum Einsatz in Spritzgießformen zum Verarbeiten thermoplastischer Materialien, mit einem im wesentlichen hohlprofilförmigen Gehäuse und einer in/an dem Gehäuse, mit Heizstrom beaufschlagbaren Heizeinheit, insbesondere Heizwendel.

Derartige Heizeinrichtungen werden als sogenannte Rohrheizpatronen bzw. Heizbänder eingesetzt, um beispielsweise Angießkanäle von Angießeinrichtungen (Heißkanaldüsen und Verteiler) auf eine vorgebbare Temperatur zu bringen bzw.auf einer vorgebbaren Temperatur zu halten, damit ein konstanter Durchfluß des dadurch im Fließbereich gehaltenen thermoplastischen Materials zu gewahrleisten.

Darüberhinaus werden derartige Heizeinrichtungen eingesetzt im Bereich von Wärmeleitrohren, die zur Temperierung von Formzonen bzw. Heißkanaldüsen und Heißkanalverteiler-Balken dienen.

### STAND DER TECHNIK

Es sind Heizeinrichtungen bekannt, bei denen die Heizwendel mit Kupfer oder Messing ausgegossen ist. Außenseitig sind diese vergossenen Heizpatronen mit einem Mantel aus nichtrostendem Stahl umgeben. Diese Heizpatronen haben den Nachteil einer relativ großen Wärmeabstrahlung nach außen. Dadurch werden Bauteile erwärmt, die eigentlich keiner Erwärmung bedürfen, was bei einer Gesamtenergiebilanzbetrachtung negativ zu Buche schlägt.

Eine Heizeinrichtung der eingangs genannten Art ist in der EP-A-0468483 offenbart. Dort ist eine Heizeinrichtung für eine Heizkanaldüse beschrieben, die abwechselnd von mehreren Schichten rostfreiem Stahl und Keramikisolationsmaterial umgeben ist. Die Dicke der Schichten kann hierbei unterschiedlich ausgeführt sein. Eine derartige Heizeinrichtung ist relativ aufwendig in ihrer Herstellung und ist hinsichtlich ihrer Isolierwirkung nicht optimal.

### DARSTELLUNG DER ERFINDUNG

Der vorliegenden Erfindung liegt die Aufgabe bzw. das technische Problem zugrunde eine verbesserte Heizeinrichtung der eingangs genannten Art anzugeben, die optimale Heizeigenschaften gewährleistet, an den Stellen, an denen die Warmeenergie oder Heizenergie benötigt wird, einen einfachen Aufbau aufweist und damit eine rationale Fertigung gewährleistet und darüberhinaus zuverlässig im Dauerbetrieb eingesetzt werden kann.

Weiterhin ist es Aufgabe der vorliegenden Erfindung, eine Heizeinrichtung anzugeben, die einen kompakten Aufbau aufweist und somit klein baut.

Eine weitere Aufgabe besteht darin, eine zuverlässig arbeitende Angießeinrichtung oder Düseneinrichtung anzugeben, die klein baut und an ihre Umgebung möglichst wenig Wärme abgibt.

Die erfindungsgemäße Heizeinrichtung ist durch die Merkmale des Anspruchs 1 gegeben. Vorteilhafte Ausgestaltungen und Weiterbildungen sind Gegenstand der Unteransprüche.

Demgemäß zeichnet sich die erfindungsgemäße Heizeinrichtung dadurch aus, daß die Isoliereinrichtung folgende Sichtweisen aufweist: Verschleißfeste Schicht, mit relativ niedriger Wärmeleitzahl, aus Titan oder einer Titanlegierung, Isolierschicht aus Glimmer, wobei die verschleißfeste Schicht innen und/oder außen angeordnet sein kann. Ob die Verschleißschicht außen oder innen oder außen und innen angeordnet wird, hängt von dem jeweiligen Einsatzgebiet ab. Durch den Einsatz der Materialien Titan/Titanlegierung und Glimmer kann eine Heizeinrichtung mit sehr kompakter Bauweise hergestellt werden, die sehr gute Isolationswerte besitzt und aufgrund ihrer hohen Verschleißfestigkeit eine hohe Standzeit besitzt.

Durch das erfindungsgemäße Heizelement wird gewährleistet, daß die Wärme in verstärktem Maß dort zugeführt wird, wo sie gebraucht wird. Ist die Isolationseinrichtung außenseitig angeordnet, ist die Heizeinrichtung bevorzugt zum Einsatz zum Ummanteln einer Düsennadel einer Angießvorrichtung geeignet, da in diesem Fall die Wärme vornehmlich dem Düsenkanal nach innen zugeführt wird, um die darin fließende thermoplastische Masse auf einer vorgebbaren Temperatur zu halten.

Darüberhinaus können die erfindungsgemäßen Heizeinrichtungen in gleicher vorteilhafter Art und Weise auf Wärmeleitrohre aufgeschoben werden.

Bei einer innenseitigen Anordnung der Isolationseinrichtung wird die erfindungsgemäße Heizeinrichtung als Heizband zur Außenbeheizung bevorzugt eingesetzt. Umgekehrt kann bei einer Anordnung der Isolationsschicht auf der Außenseite die Heizeinrichtung als Heizband zur Innenbeheizung eingesetzt werden.

Durch den Einsatz der genannten Isoliermaterialien läßt sich eine sehr gute Wärmedämmung verwirklichen.

Zum Zwecke einer einfachen und kostengünstigen Herstellung der gesamten Heizeinrichtung hat es sich als günstig erwiesen, je nach Anwendungsfall entweder bei der Herstellung der Heizeinrichtung die Isoliereinrichtung außenseitig auf das Gehäuse aufschiebbar oder innenseitig in das Gehäuse einschiebbar auszubilden.In einer weiteren Variante bildet die Isoliereinrichtung selbst das Gehäuse. Auch kann die Isoliereinheit als Schalung für das Vergießen der Heizwendel mit wärmeleitendem Material abgesetzt werden, was eine besonders kostengünstige Fertigung erlaubt.

Hinsichtlich einer guten Wärmeübertragung von der Heizwendel auf das zu erwärmende Bauteil ist es vorteilhaft, die Heizwendel mit einem sehr gut wärmeleitenden Material (z. B. Kupfer, Kupferlegierung, Messing, usw.) zumindest bereichsweise zu vergießen.

Eine bevorzugte Ausgestaltung zeichnet sich dadurch aus, daß die Heizeinheit (Heizwendel) bereichsweise derart vergossen ist, daß die Heizwendel selbst noch bereichsweise aus dem Vergußbereich übersteht und daß bei auf dem Überstand anliegender Isoliereinrichtung zusätzlich zwischen der Vergußmasse und der Isoliereinrichtung eine isolierende Luftschicht vorhanden ist.

Eine erfindungsgemäße Spritzgießform mit Heißkanal zum Verarbeiten thermoplastischer Materialien ist dadurch gekennzeichnet, daß zumindest eine erfindungsgemäße Heizeinrichtung angeordnet

Eine erfindungsgemäße Angießeinrichtung (Heißkanal) für eine Spritzgießform zum Verarbeiten von thermoplastischem Material zeichnet sich dadurch aus, daß die Angießeinrichtung zumindest eine erfindungsgemäße Heizeinrichtung in intergrierter Bauweise aufweist.

Mit der erfindungsgemäßen Heizeinrichtung lassen sich Energieeinsparungen verwirklichen, die gegenüber den bisherigen bekannten Heizeinrichtungen bis zu 50 % und mehr betragen. Weiterhin ist es möglich, zu kompakten Abmessungen zu kommen, da die Abmessungen für die Heizeinheit selbst kleiner gehalten werden können infolge der verbesserten Zuführung der Wärme an die Stellen, an denen die Wärme benötigt wird. Die Temperatur des Werkzeuges selbst wird verringert.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Figur 1:: Schematische Schnittdarstellung einer Heizeinrichtung mit Isoliereinrichtung für ein Wärmeleitrohr,
- Figur 2:: Schematische Schnittdarstellung einer Heizeinrichtung mit Isoliereinrichtung für eine Düseneinrichtung,
- Figur 3:: Schematischer Schnitt durch ein Heizband mit einer Isoliereinrichtung für Außenbeheizung,
- Figur 4:: Schematischer Schnitt durch ein Heizband mit einer Isoliereinrichtung für Innenbeheizung,
- Figur 5:: Schematischer Schnitt durch eine Heizpatrone mit einer schichtweisen Isoliereinrichtung gemäß einem ersten Ausführungsbeispiel,
- Figur 6:: Stirnansicht der Heizpatrone gemäß Figur 5,
- Figur 7:: Detail aus der Wandung einer Heizpatrone mit einer schichtweisen Isoliereinrichtung gemäß einem zweiten Ausführungsbeispiel,
- Figur 8:: Schematischer Längsschnitt durch eine Heizpatrone mit schichtweiser Isoliereinrichtung gemäß einem dritten Ausführungsbeispiel,
- Figur 9:: Stirnansicht gemäß der Heizpatrone gemäß Figur 8,
- Figur 10:: Detail aus der Wandung einer Heizpatrone mit einer schichtweisen Isoliereinrichtung gemäß einem vierten Ausführungsbeispiel,
- Figur 11:: Anordnung einer Heizeinrichtung innerhalb einer Angießeinrichtung und
- Figur 12:: Schematischer Schnitt durch eine Düseneinrichtung mit Heizeinrichtung.

### WEGE ZUM AUSFÜHREN DER ERFINDUNG

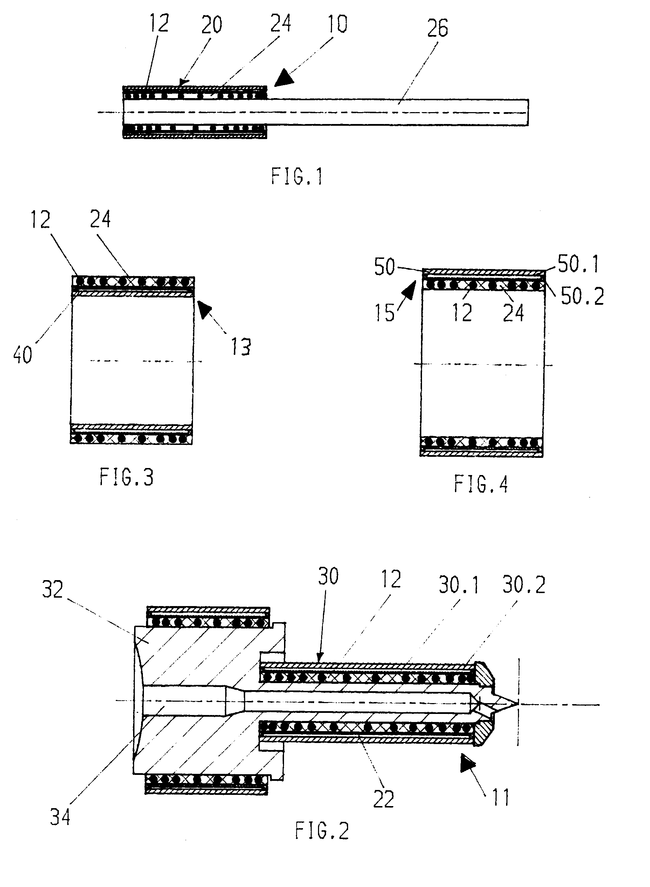

Gemäß Figur 1 ist auf ein Wärmeleitrohr 26, das insbesondere zur Temperierung von nicht dargestellten Formzonen dient, eine Heizeinrichtung 10 außenumfangförmig angeordnet, die an dem Außenumfang des Wärmeleitrohres 26 anliegt. Die Heizeinrichtung 10 selbst weist von innen nach außen zunächst eine erste Vergußschicht 24 aus Messing auf, innerhalb derer eine Heizeinheit bzw. Heizwendel 12 eingegossen ist. Außenseitig umgibt die Vergußeinheit 24 eine Isoliereinrichtung 20. Da im Randbereich eine erhöhte Heizleistung benötigt wird, ist die Ganghöhe der Heizwendel 12 in diesem Bereich verkleinert.

Die in Figur 2 schematisch dargestellte Heizeinrichtung 11 ist außenumfangsseitig auf den Düsenkanal 34 einer Düseneinrichtung 32 aufgebracht. Sie weist einen ähnlichen Aufbau auf wie die Heizeinrichtung 10 gemäß Figur 1, jedoch ist neben einer ersten Isolierschicht 30.1 außenseitig eine zweite Isolierschicht 30.2 vorhanden. Die erste Isolierschicht 30.1 kann aus Keramik oder Glimmer. Die die zweite Isolierschicht 30.2 ist gleichzeitig als Verschleißschicht ausgebildet und besteht aus einer Titanlegierung mit einem niedrigen Wärmeleitwert.

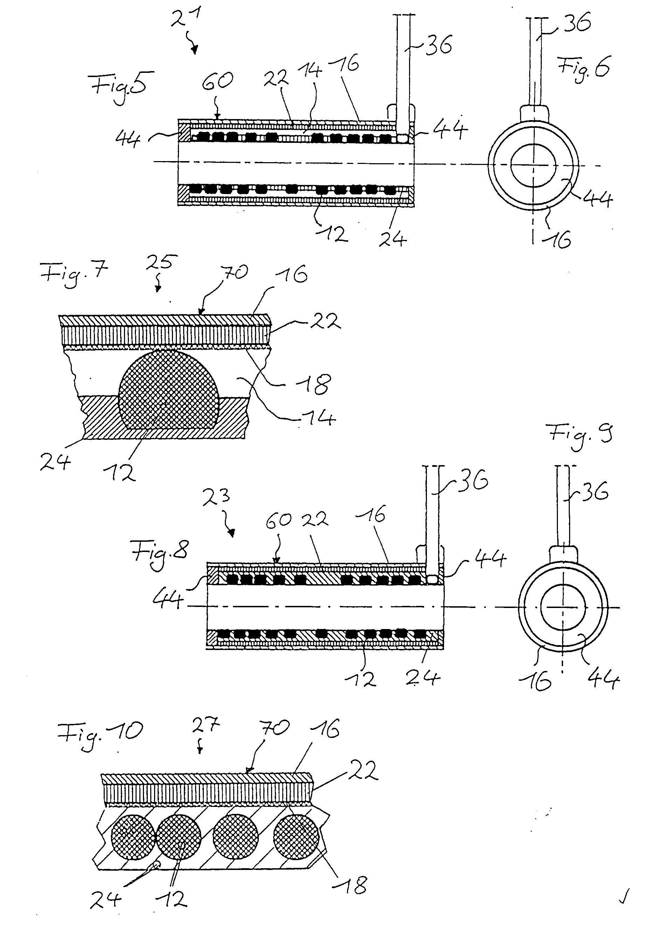

In Figur 3 ist schematisch ein Heizband 13 dargestellt, das für die Außenbeheizung eingesetzt wird. Hierbei ist die Heizeinheit 12 mit ihrer Vergußschicht 24 außenseitig angeordnet. Nach innen schließt eine isolierschichtartig ausgebildete Isoliereinrichtung 40 an.

Das in Figur 4 dargestellte Heizband 15 ist für eine sogenannte Innenbeheizung geeignet, d.h. eine Isoliereinrichtung 50 befindet sich bei dieser auf der Außenseite und weist in diesem Ausführungsbeispiel eine erste Isolierschicht 50.1 und eine zweite Isolierschicht 50.2 auf.

In den Figuren 1 bis 4 ist die Stromzuführung der Heizeinheit 12 nicht dargestellt.

Das in Figur 7 detailweise dargestellte konkrete Ausführungsbeispiel der Wandung einer Heizeinrichtung 25, die als zylindrische Heizpatrone 25 ausgebildet ist, besteht aus folgendem schichtweisen Aufbau. Innenseitig ist eine als Vergußschicht 24 ausgebildete Vergußeinheit vorhanden, innerhalb derer die Heizwendel 12 vergossen vorhanden ist. Die einzelnen Heizwendelquerschnitte 12 sind jedoch nicht vollständig von Gußmasse umgossen, so daß sie nach außen überstehen.

Die teilweise vergossene Heizwendel 12 wird außenseitig von einer Isoliereinrichtung 70 umgeben, die folgenden Aufbau besitzt. An die überstehenden Heizwendelelemente 12 schließt zunächst eine erste Verschleißschicht 18 an, die auseiner Titanlegierung mit niedriger Wärmeleitzahl besteht. Auf der ersten Verschleißschicht 18 ist eine Isolierschicht 22 vorhanden, auf der wiederum eine die Heizpatrone 25 nach außen umschließende zweite Verschleißschicht 16 vorhanden ist, die aus einer Titanlegierung mit niedriger Wärmeleitzahl besteht. Die Heizwendelquerschnitte sind im Bereich der sie umgebenden Vergußschicht 24 abgeflacht.

Es besteht somit zwischen der Heizeinheit 12 und der Isoliereinrichtung 70 eine Luftschicht 18, die die Isolierwirkung zusätzlich erhöht.

In der folgenden Beschreibung tragen gleiche Bauteile dasselbe Bezugszeichen und werden nicht nochmals erläutert.

Die in Figur 5 schematisch dargestellte Heizpatrone 21, ist ähnlich wie die Detaildarstellung der Heizpatrone 25 gemäß Figur 7 mit einer Luftschicht 14 zwischen Heizeinrichtung 12 und einer außenseitigen Isoliereinrichtung 60 ausgebildet, jedoch besteht die Isoliereinrichtung 60 nur aus einer äußeren Verschleißschicht 16, und einer inneren Isolierschicht 22, wobei die Heizwendel 12 eine Viereckprofilierung aufweist.

Stirnseitig wird die Heizpatrone 21 gemäß Figur 5 durch Kreisringprofile 44 abgeschlossen, deren Dicke der Dicke der Vergußschicht 24, der Luftschicht 14 und der inneren Isolierschicht 22 entspricht. Ebenfalls ist in Figur 5 eine Stromanschlußeinheit 36 an die Heizeinheit 12 schematisch dargestellt.

Die in Figur 8 dargestellte Heizpatrone 23 unterscheidet sich von der Heizpatrone gemäß Figur 5 dadurch, daß hier auf das Vorsehen einer zusätzlich isolierenden Luftschicht 14 verzichtet worden ist und die Vergußschicht 24 bis direkt an die Isolierschicht 22 heranreicht, d.h. die Heizwendel 12 nahezu vollständig mit Messing vergossen ist.

Der in Figur 10 dargestellte schematische Teilausschnitt der Wandung einer Heizpatrone 27 weist dieselbe schichtweise Isoliereinrichtung 70 wie die Heizpatrone 25 gemäß Figur 7 auf. Die Heizeinrichtung 12 besitzt eine Heizwendel mit einem kreisförmigen Profil, wobei die einzelnen Wendeln vollständig von einer Vergußeinheit 24 umgeben sind und die Isoliereinrichtung 70 direkt an die Vergußschicht 24 außenseitig anschließt.

Die Vergußmasse kann aus Messing, Kupfer oder anderen gut wärmeleitenden Legierungen bestehen. Die isolierenden Verschleißschichten bestehen bevorzugt aus Titan bzw. Titanlegierungen, deren Unterseite poliert ausgebildet ist. Als Material für die Isolationsschicht kommt bevorzugt Keramik oder Glimmer in Betracht. Daneben kann die Isolationsschicht auch als Luftschicht oder Vakuumschicht ausgebildet sein.

Die Heizpatronen 21, 23, 25, 27 weisen einen konstant durchgehenden Innendurchmesser auf, so daß sie problemlos auf beispielsweise eine Düseneinrichtung einer Spritzgießform zum Verarbeiten thermoplastischer Massen aufgeschoben werden können.

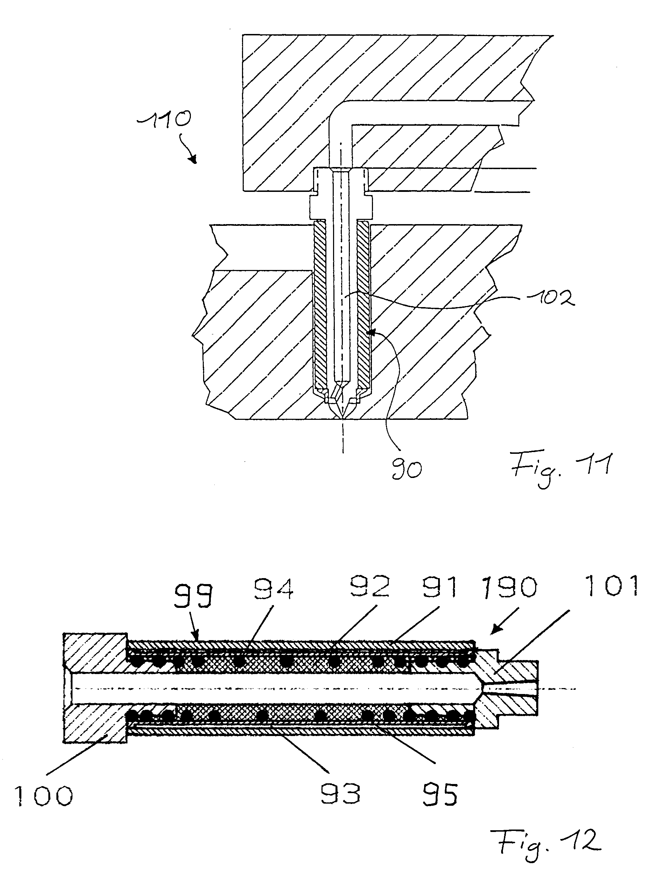

In Figur 11 ist schematisch dargestellt, in welch einfacher Art und Weise die erfindungsgemäße Heizeinrichtung 90 mit Isoliereinrichtung an einer Angießvorrichtung 110 im Bereich eines Düsenkanals 102 ummantelnd eingesetzt werden kann.

In Figur 12 ist schematisch im Querschnitt eine Düseneinrichtung 190 dargestellt, bei der die Heizeinrichtung 99 zwischen einem aus Spezialstahl bestehenden Düsenkopf 100 und einem aus Spezialstahl bestehenden Düseneinsatz 101 integriert vorhanden ist. Die Düseneinrichtung 190 ist als Wegwerfdüse konzipiert. Die Heizeinrichtung 99 weist von innen nach außen folgenden schichtweisen Aufbau auf: Messinggußschicht 92 mit darin vergossenen Heizwendeln 94, Titanlegierungsschicht 95, Glimmerfüllung 93 und außen umfangsseitig abschließend eine Titanlegierungsschicht 91.

Zur Herstellung von Heizeinrichtungen wird bevorzugt das Kokillengußverfahren eingesetzt, bei dem bevorzugt Messing als Gußmaterial zum Umhüllen der Heizwendeln verwendet wird.

Die Düseneinrichtung 101 gemäß Figur 12 ist bevorzugt als "Mikrodüse" ausgebildet, die Längenabmessungen von ca. 6 cm und Durchmesserabmessungen von ca. 1 cm aufweist.

Erfindungsgemäß ist die Heizeinrichtung als zylindrisches Hohlelement ausgebildet, wobei die einzelnen Schichten zumindest bereichsweise aneinanderliegende Hülsen bilden.

## Patentansprüche

1. Heizeinrichtung (10; 11; 13; 15; 21; 23; 25; 27; 90), insbesondere zum Einsatz in Spritzgießformen zum Verarbeiten thermoplastischer Materialien, mit
- einem im wesentlichen hohlprofilförmigen Gehäuse,
- einer in/an dem Gehäuse vorhandenen, mit Heizstrom beaufschlagbaren Heizeinheit (12), insbesondere Heizwendel, wobei
- zumindest bereichsweise eine die Heizeinheit innen- oder außenseitig umgebende schichtartige Isoliereinrichtung (20; 30; 40; 50; 60; 70) vorhanden ist und
- die Isoliereinrichtung (20; 30; 40; 50; 60; 70) in Sandwichbauweise mit zumindest einer Isolierschicht ausgebildet ist,
**dadurch gekennzeichnet**, daß
die Isoliereinrichtung (20; 30; 40; 50; 60; 70) folgenden schichtweisen Aufbau aufweist:
- verschleißfeste Schicht (16), mit relativ niedriger Wärmeleitzahl, aus Titan oder einer Titanlegierung,
- Isolierschicht (22) aus Glimmer, wobei die verschleißfeste Schicht innen und/oder außen angeordnet sein kann.

2. Heizeinrichtung nach Anspruch 1,
**dadurch gekennzeichnet**, daß
zwischen Isoliereinrichtung (20; 30; 40; 50 60; 70) und Heizeinheit (12) zusätzlich eine Luftschicht (14) vorhanden ist.

3. Heizeinrichtung nach einem oder mehreren der vorstehenden Ansprüche,
**dadurch gekennzeichnet**, daß
für die Herstellung der Heizeinrichtung die Isoliereinrichtung außenseitig/innenseitig auf das Gehäuse aufschiebbar/einschiebbar ausgebildet ist oder die Isoliereinrichtung die Außenwandung/die Innenwandung des zu vergießenden Heizelementes bildet.

4. Heizeinrichtung nach einem oder mehreren der vorstehenden Ansprüche,
**dadurch gekennzeichnet**, daß
die Heizeinheit (14) zumindest bereichsweise mit einem leitenden Material (24), bevorzugt Messing, vergossen ist.

5. Heizeinrichtung nach einem oder mehreren der vorstehenden Ansprüche,
**dadurch gekennzeichnet**, daß
die Isoliereinrichtung das Gehäuse der Heizeinrichtung bildet.

6. Spritzgießform mit Heißkanal oder beheizter Düse zum Verarbeiten thermoplastischer Materialien,
**dadurch gekennzeichnet**, daß
zumindest eine Heizeinrichtung nach einem oder mehreren der vorstehenden Ansprüche angeordnet ist.

7. Angießeinrichtung oder Düseneinrichtung für eine Spritzgießform zum Verarbeiten von thermoplastischen Materialien,
**dadurch gekennzeichnet**, daß
die Angießeinrichtung (110) oder Düseneinrichtung (190) eine Heizeinrichtung (90) nach einem oder mehreren der vorstehenden Ansprüche 1 bis 5 in integrierter Bauweise aufweist.

## Claims

1. Heating device (10; 11; 13; 15; 21; 23; 25; 27; 90), in particular for use in injection moulds for the processing of thermoplastic materials, having
- a housing substantially in the form of a hollow profile,
- a heating unit (12), in particular heating coil, which is in/on the housing and can be subjected to heating current, where
- there is, at least in certain regions, a layer-like insulating device (20; 30; 40; 50; 60; 70) surrounding the heating unit on the inside or on the outside and
- the insulating device (20; 30; 40; 50; 60; 70) is formed in a sandwich construction having at least one insulating layer,
characterized in that the insulating device (20; 30; 40; 50; 60; 70) has the following layered structure:
- wear resistant layer (16), with relatively low coefficient of thermal conductivity, of titanium or a titanium alloy,
- insulating layer (22) of mica, it being possible for the wear resistant layer to be arranged on the inside and/or outside.

2. Heating device according to Claim 1, characterized in that between the insulating device (20; 30; 40; 50; 60; 70) and the heating unit (12) there is additionally a layer of air (14).

3. Heating device according to one or more of the preceding claims, characterized in that, for producing the heating device, the insulating device is formed such that it can be pushed onto the housing on the outside/can be pushed into the housing on the inside, or the insulating device forms the outer walling/the inner walling of the heating element to be cast.

4. Heating device according to one or more of the preceding claims, characterized in that the heating unit (14) is cast, at least in certain regions, with a conducting material (24), preferably brass.

5. Heating device according to one or more of the preceding claims, characterized in that the insulating device forms the housing of the heating device.

6. Injection mould with hot runner or heated nozzle for the processing of thermoplastic materials, characterized in that there is arranged at least one heating device according to one or more of the preceding claims.

7. Gating device or a nozzle device for an injection mould for the processing of thermoplastic materials, characterized in that the gating device (110) or nozzle device (190) has a heating device (90) according to one or more of the preceding Claims 1 to 5 in an integrated construction.

## Revendications

1. Dispositif de chauffage (10; 11; 13; 15; 21; 23; 25; 27; 90), à utiliser en particulier dans des moules à injection pour le moulage de matériaux thermoplastiques, comprenant
- un corps ayant essentiellement la forme d'un profil creux,
- une unité chauffante (12), en particulier une spirale chauffante, disposée dans ou sur le corps et dans laquelle on peut faire circuler un courant électrique de chauffage,
- avec prévision d'un dispositif isolant (20; 30; 40; 50; 60; 70) semblable à une couche qui entoure l'unité chauffante au moins par endroits, sur le côté intérieur ou le côté extérieur,
- le dispositif isolant (20; 30; 40; 50; 60; 70) étant réalisé en construction sandwich avec au moins une couche isolante,
caractérisé en ce que le dispositif isolant (20; 30; 40; 50; 60; 70) présente une structure stratifiée comprenant:
- une couche (16) résistante à l'usure, ayant une conductivité thermique relativement faible, en titane ou alliage de titane et
- une couche isolante (22) de mica, la couche résistante à l'usure pouvant être disposée à l'intérieur et/ou à l'extérieur.

2. Dispositif de chauffage selon la revendication 1, caractérisé en ce qu'une couche d'air supplémentaire (14) existe entre le dispositif isolant (20; 30; 40; 50; 60; 70) et l'unité chauffante (12).

3. Dispositif de chauffage selon l'une des revendications précédentes, ou les deux, caractérisé en ce que, pour la fabrication du dispositif de chauffage, le dispositif isolant est réalisé pour pouvoir être glissé extérieurement ou intérieurement sur ou dans le corps, ou le dispositif isolant forme la paroi extérieure ou la paroi intérieure d'un élément chauffant à incorporer par coulée.

4. Dispositif de chauffage selon une ou plusieurs des revendications précédentes, caractérisé en ce que l'unité chauffante (14) est incorporée par coulée, au moins par endroits, dans un matériau conducteur (24), du laiton de préférence.

5. Dispositif de chauffage selon une ou plusieurs des revendications précédentes, caractérisé en ce que le dispositif isolant forme le corps du dispositif de chauffage.

6. Moule à injection possédant un canal chauffant ou une buse chauffée pour le moulage de matériaux thermoplastiques, caractérisé en ce qu'il est muni d'au moins un dispositif de chauffage selon une ou plusieurs des revendications précédentes.

7. Dispositif de carotte ou dispositif de buse pour un moule à injection servant au moulage de matériaux thermoplastiques, caractérisé en ce que le dispositif de carotte (110) ou le dispositif de buse (190) comporte un dispositif de chauffage (90) selon une ou plusieurs des revendications 1 à 5 précédentes dans une construction intégrée.
